# EUROPEAN PATENT APPLICATION

(11) **EP 1 307 019 A1**
(43) Date of publication of application: **02.05.2003**
(21) Application number: 01125568.4
(22) Date of filing: 25.10.2001
(51) Int. Cl.: H04L 29/06

(54) **Method and apparatus for personal information access control**

(71) Applicant: Telefonaktiebolaget L M Ericsson (Publ), 126 25 Stockholm (SE)
(72) Inventor: Holtmanns, Silke, 52499 Baesweiler (DE); Gerdes, Martin, 52134 Herzogenrath (DE); Schuba, Marko, 52134 Herzogenrath (DE)
(74) Representative: Tonscheidt, Andreas

(57) **Abstract**

For control of access of personal information in accordance with a privacy policy defined for a service provider, a method is disclosed, wherein the method comprises the steps of providing service provider request data from a service provider to an end user device, the service provider request data being indicative of personal information of a user of the end user device to be accessed by the service provider, providing to the service provider first user data including at least one of personal information of the user as requested by the service provider or rejections of personal information requested by the service provider, creating privacy receipt data including the first user data and data being indicative of the service provider, and providing the privacy receipt data to the end user device.

## Description

### BACKGROUND OF THE INVENTION

### 1. Technical Field

The present invention is related to personal information provided and communicated in a technical system. In particular, the present invention is related to personal information of a user provided via a telecommunications network to a service provider from which the user has requested a service.

### 2. State of the Art

Many network and service providers, such as mobile communications networks and Internet providers, request personal information of a user for delivering a service requested by the user. In order to ensure that personal information is protected against misuse, e.g. by the contacted service provider, and to comply with legal regulations concerning the protection of personal information existing in many countries, the privacy and protection of personal information is an issue of increasing importance.

For the Internet, the World Wide Web consortium has developed an Internet privacy protocol, namely the P3P (platform for privacy preferences). This protocol is user agent based and forces the operator service network and other service providers to implement the privacy policy in special syntax and semantics. Further, users have to configure their own privacy policy.

Privacy policies of users and service providers are cross-checked against each other. Here fore, the privacy policy of the service provider has to be machine readable and the user has to read detailed questions and to confirm/answer or reject them. This approach results in a user behavior wherein privacy policies of service providers are not entirely read and uncritically accepted, e.g. by simply clicking the "accept" button. Further, the P3P protocol requires a communication of large data volumes and many "round trips" (i.e. data communications between a service provider and a user and vice versa).

Due to such drawbacks, the P3P protocol, originally developed for the wired environment of the Internet, is not a proper solution for systems/networks servicing mobile end user devices by wireless communication links. Examples for such a mobile environment include telecommunications systems (e.g. GSM networks, UMTS networks) comprising mobile telephones, portable computer systems, paging devices and the like.

Currently there is no functionality available for mobile environments to enable users accessing information such as:
- Was there personal information transferred?
- What kind of personal information has been transferred?
- To whom has personal information been transferred?
- What is the privacy policy of the party which has obtained the personal information?

Such information will be essential for the users and services provided in a mobile environment, since there are usually two basic options existing:

Users can request services from the service network of the operator providing the respective mobile environment. In this context, operators include operators actually operating a mobile environment and operators just acting as providers of a mobile environment. Alternatively, users can use a service provided by another service providing party. For the latter case, the privacy issue is even more essential, since some services request personal information, such as the address, the geographic location, the bank account, the credit card number and the like of a service requesting user. Personal information should be only provided to the service providing party by the operator of the mobile environment after agreement of the user. Otherwise, users could loose their trust in their mobile environment operator, and mobile environments could loose the status as trusted systems, especially with respect to services provided by parties other than the mobile environment operators. Further, users will only cooperate with service providers if the privacy of the users will be properly protected.

### OBJECT OF THE INVENTION

The object of the present invention is to provide for a solution wherein the provision of personal information to be accessed by a third party can be easily controlled and monitored. Further, the present invention should provide information how provided personal information will be accessed and used. In particular, the present invention should provide such a solution for applications in mobile environments, such as mobile communications systems.

### BRIEF DESCRIPTION OF THE INVENTION

The basic idea underlying the present invention is to provide a so called privacy receipt to a user who has communicated personal information to a third party, such as a service provider. The privacy receipt includes data indicating who obtained when the user's personal information and which kind of information has been provided by the user or by an operator employed by the user for communications in relation with the third party and in particular the service provider.

Further, the privacy receipt may comprise information related to a privacy policy of the third party to which the user's personal information has been communicated. In this context, a privacy policy defines how a third party has bound itself to handle provided personal data, wherein the privacy policy can be defined for and/or by the third party and/or can be based on general and/or legal rules and regulations. In particular, it is contemplated that such a privacy policy is valid for the service provider. However, the proposed method is also applicable if no privacy policy of the third party exists or if it is unknown to the user.

In particular, the present invention provides for a solution suitable for systems and environments including mobile end user devices, such as mobile telephones, and wireless communication links. Moreover, the present solution ensures that manipulations of a privacy policy accepted for a provision of personal information can not be subsequently performed, e.g. by the third party receiving the provided personal information.

In greater detail, the method according to the invention provides for personal information access control, wherein a user providing personal information receives a privacy receipt which can be used by the user to get knowledge of the party having received the personal information and which kind of personal information was provided.

To inform a user which kind of personal information should be provided, a service provider, such as an Internet service provider, communicates service provider request data to an end user device of the respective user. The service provider request data define personal information of the user which will be accessed and used by the service provider.

The service provider request data can be provided by the service provider in response to service request data communicated from the end user device to the service provider, wherein the service request data indicate a request of the user for a service to be provided or delivered by the service provider.

On the basis of the service provider request data, user data are provided to the service provider. The user data can include all personal information requested, or several of the requested personal information and rejections of the remaining requested ones. Usually, service providers requesting personal information as a pre-requisite for providing/delivering a requested service demand that a minimum of personal information is provided by a user. Nevertheless, it is contemplated that the user data can include only rejections of personal information request by the service provider, e.g. the user is not willing to provide any personal information.

For generating the above named privacy receipt, privacy receipt data are created which include at least one of (parts of) the user data and data characterizing the service provider.

In order, for example to control which party has obtained which user data, the privacy receipt data are provided for access by the end user device and its user, respectively.

Some service providers do not only require the provision of personal information, but also request a confirmation indicating that the user agrees to provide personal information and access the same. In this respect, the privacy receipt data can serve as such a confirmation by providing the privacy receipt data to the service provider.

As set forth above, the method can be applied for the case where a privacy policy is valid for the service provider.

For communications purposes between the end user device and the service provider, a communications server can be provided. Examples for the communications server include at least one of computer and telephone network operators, providers, systems and base station utilizing wire and wireless communication links, computer network servers, and the like.

Independently of the existence of a communications server, the user data can be provided by the end user device to the service provider.

In case a communications server is employed, the user data can be provided by the communications server to the service provider wherein here the user data are determined in accordance with indications from the end user device. Such indications include at least one of information concerning personal data which can be provided to the service provider in response to the service provider requests data and information of personal data which should not be communicated to the service provider.

Having received the user data, the service provider can access the personal information and, if requested, deliver a service.

Further, it is possible that the service provider provides its privacy policy which may be included in the privacy receipt data.

In the case the privacy policy or data being indicative thereof is included in the privacy receipt, the end user device is enabled to access the privacy policy without further action. In many cases, users are not interested in a privacy policy itself but only in information concerning personal information communicated to the service provider. Here it is preferred, that the privacy receipt data, optionally including the privacy policy, is provided by the service provider or by means of a third party upon request by the end user device in order to enable users usually not interested in the privacy policy to obtain the respective privacy policy.

The privacy receipt data can also include further information related to the provision of the user's personal information such as data being indicative of the time when the user data has been provided to the service provider, the creation time of the privacy receipt data, the identity of the user, the identity of the end user device, and the like. Moreover, the privacy receipt data can include information that the privacy policy or respective data has been provided.

For the creation of the privacy receipt data, the communications server for the end user device can be employed. Here, the provision of the privacy receipt data to the end user device is performed by communicating the privacy receipt data from the communications server to the end user device.

In a preferred embodiment of the method according to the invention, the service provider includes privacy policy data being indicative of its privacy policy in the service provider request data and communicates the same to the communications server. The communications server removes the privacy policy data from the service provider request data and creates the privacy receipt data optionally including the privacy policy data. In order to reduce storage requirements, e.g. if a plurality of users receive data requests from the same service provider or a user often, regularily accesses a service provider, it is contemplated to separately store the privacy policy. Then, the privacy receipt data can include a pointer to the privacy policy for retrieval.

On the basis of the requested personal information defined in the service provider request data, the communications server generates communications server request data indicating which personal information is requested by the service provider and communicates the communications server request data to the end user device. In response thereto, the end user device transmits response data being indicative of one of at least the provided and rejected requested personal information to the communications server. The communications server communicates communications server data to the service provider, wherein the communications server data comprises personal information contained in the response data or determined according to indications obtained from the end user device. In case of personal information indications, the end user device does not provide personal information as such, but information which kind of personal information the communications server is allowed to provide to the service provider. In relation to the service provider request for personal information and in accordance with such indications, the communications server accesses or determines respective personal information and communicates the same to the service provider. Such indications include provision of the user's name, address, bank account, credit card number, etc. and location data of the user and the end user device, respectively, which can e.g. be determined by the communications server operating as operator of a mobile communications system. Preferably, personal information provided from the communications server to the services provider is communicated as "hard" data, i.e. data actually including personal information. For security purposes, such "hard" data can be encrypted.

In order to facilitate the provision of personal information, user data can be defined which can be, automatically without further action by the end user device or its user or according to a confirmation or selection of the user, communicated to the service provider in response to a respective request. In the case the automatically communicated user data cover all requested personal information, a user action is not necessary or the user only needs to confirm the data transmission and, preferably, selects data for transmission.

In order to ensure that personal information is provided to the service provider only in the case the user of the end user device has agreed to provide personal information, it is contemplated to communicate user data automatically to the service provider if the response data includes at least one personal information as requested by the service provider, i.e. the response data do not include only rejections of requested personal information.

Preferably, however, the user receives a list of request data and selects from the list data which shall be provided. Then, according indications are provided to the communications server which can provide the service provider with respective personal information, e.g. included in the user data.

In order to reduce the amount of data communicated from the communications server to the end user device, it is possible that the communications server request data do not include the privacy policy data. Then, it is preferred that the privacy policy data are stored by the communications server such that the end user device can, if desired, obtain the privacy policy by sending a respective request to the communications server.

In a further preferred embodiment, data communications between the service provider and the end user device and vice versa, respectively, are encrypted such that the communications server can not access and read data of the service provider and the end user device. Here, the data encryption should be performed such that the communications server can recognize that the service provider requests personal information in order to create the privacy receipt data. Further, it is contemplated that the data encryption allows the communications server to remove the privacy policy data.

In another preferred embodiment, the service provider request data are communicated from the service provider directly to the end user device by tunneling a communications server for the end user device, i.e. the communications server can not access data communications (data traffic) exchanged between the service provider and the end user device. In a comparable manner, the user data can be communicated directly to the service provider by tunneling the communications server.

In order to create the privacy receipt data, the end user device further communicates the user data to the communications server, which creates in response thereto the privacy receipt data.

Here, it is contemplated that the service provider request data include the privacy policy of the service provider, whereby the end user device can communicate respective privacy policy data or the privacy policy to the communications server. Then, the communications server can store the privacy policy data in the privacy receipt data.

Again, data exchanges between the service provider and the end user device can be encrypted for denying access by the communications server or any other third party.

In order to prove whether the privacy policy for the present service provider request for personal information is the actual service provider's privacy policy, it is possible to compare the privacy policy for the service provider request data and further privacy policy obtained from the service provider and to inform the end user device in case the compared privacy policies are different. If the comparison shows that the privacy policies are equal the privacy receipt data can be created. This comparison can be performed for any format of a privacy policy, e.g. a text file.

In case of a communications server, a request from the communications server can be communicated to the service provider for requesting the further privacy policy. Then, the requested further privacy policy is transmitted to the communications server which compares the privacy policies for the current service provider request and obtained from the service provider upon the communications server request for warning the end user device in case the comparison fails or for creating the privacy receipt data.

As set forth above, the end user device can request the privacy policy by means of respective request data for accessing the privacy policy upon receipt thereof. In case of a communications server, such privacy policy request data can be communicated from the end user device to the communications server, which communicates the privacy policy data or data being indicative of the privacy policy data to the end user device.

Further, the present invention provides systems, devices, components and the like, such as a communications server, an end user device and a computer software program product which are adapted and programmed to implement and carry out the underlying basic approach according to the invention, in particular the creation of privacy receipt data. Moreover, they should be adapted and programmed to carry out the method according to the invention as defined above.

### BRIEF DESCRIPTION OF THE FIGURES

In the following description of preferred embodiments it is referred to the enclosed drawings wherein:
- Figure 1: illustrates a communications environment for use with the present invention,
- Figure 2: illustrates a part of the communications environment of Figure 1,
- Figure 3: illustrates an end user device according to the present invention,
- Figure 4: illustrates a communications server according to the present invention, and
- Figures 5 to 10: illustrate data structures according to the present invention.

### DESCRIPTION OF PREFERRED EMBODIMENTS

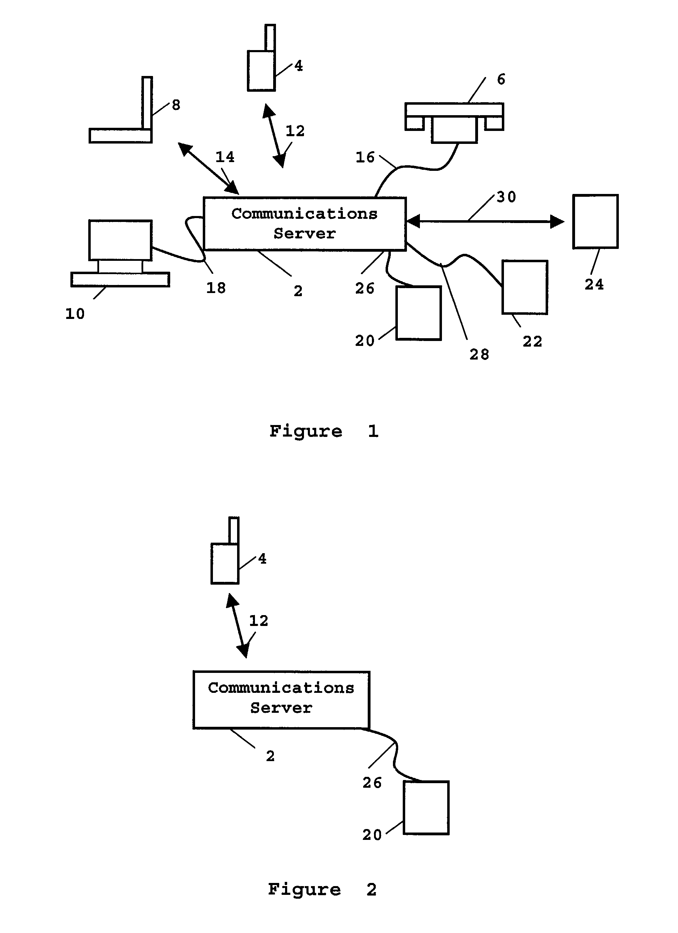

As shown in Figure 1, a communications environment being adapted and programmed to carry out the present invention comprises a communications server 2. Generally, the communications server 2 is part of a communications system of an operator, e.g. a GSM or UMTS network, not shown in the figures. The communications server 2 allows for and controls communications from and to associated end user devices, of which, by the way of example, Figure 1 shows a mobile phone 4, a stationary phone 6, a portable computer 8 and a desktop computer system 10.

For communication purposes, the end user devices 4, 6, 8 and 10 can establish wireless communication links 12 and 14 and wired communication links 16 and 18.

Further, the communications server 2 is connected to systems, networks, devices and the like serving as services providers 20, 22 and 24. Communication links between the communications server 2 and the service providers 20, 22 and 24 can be wired and wireless communication links 26, 28 and 30.

In the following, it is referred to Figure 2 showing the communication server 2, the mobile phone 4, the wireless communication link 12, the service provider 20 and the wired communication link 26 of Figure 1.

As shown in Figure 3, the mobile phone 4 comprises an antenna 32 and a sender/receiver unit 34 coupled thereto. The antenna 32 and the sender/receiver unit 34 serve as communication interface for data communications with the communications server 2. For controlling the operation of the mobile phone 4, a control/processing unit 36 is employed which is operatively couplet to the antenna 32, the sender/receiver unit 34, at least one of a security identity module SIM 38 and a wireless identity module WIM 40, and a memory 42. It is to be noted that the security identity module 38 and the wireless identity module 40 can be embodied as separate units, or as a single unit or units implemented in one element, e.g. a chip, providing the functionality of SIM 38 and WIM 40.

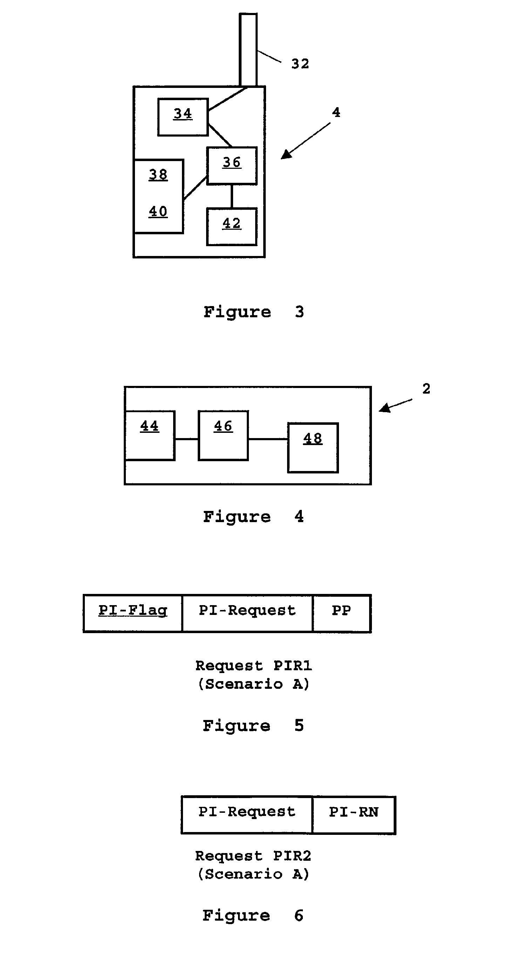

The communications server 2 comprises, as shown in Figure 4, a communication interface unit 44 for communication links to the mobile phone 4 and the service provider 20, a processor unit 46 for controlling its operation and a memory 48 for storing data as described below.

### Scenario A

The user (not shown) of the mobile phone 4 wants a service of the service provider 20 to be delivered/provided. Here fore, the user sends, by means of the mobile phone 4, a service request to the service provider 20, either via the communications server 2 or, as an alternative, directly to the service provider 20.

In case, the service request is communicated to the communications server 2, the communications server 2 forwards the service request to the server provider 20. Optionally the communications server 2 "blinds" the service request from the mobile phone 4, i.e. the source of the request will remain unknown to the service provider 20, and the mobile phone 4 and its user, respectively, cannot be identified.

For delivering the service requested by the user of the mobile phone 4, the service provider 20 requests personal information of the user. Examples for such personal information include the name, the address, the geographic location, the bank account, the credit card number, the age, the sex and like of the user, the phone number of the mobile phone 4, etc. For personal information protection, a privacy policy valid for the service provider 20 is employed which includes rules and regulations of how personal information is to be accessed, processed, distributed stored, etc. by the service provider 20.

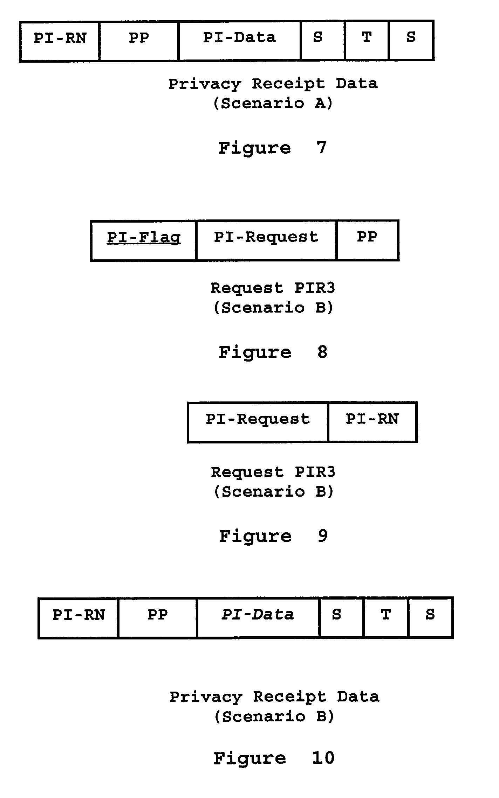

The request for personal information and the privacy policy is transmitted to the communications server 2 as a request PIR1 illustrated in Figure 5. The request PIR1 includes a flag PI-Flag, the detailed personal information request PI-Request and the attached privacy policy PP. The flag PI-Flag informs the receiving communications server 2 that the data transmitted from the service provider includes a request for personal information.

Upon receipt of the request PIR1, the communications server reads the enabled flag PI-Flag and assigns a receipt number PI-RN to this information flow. Further, the privacy policy PP is removed/cut from the data received from the service provider 20 and stored as a part of privacy receipt data, which will be described below with reference to Figure 7.

The communication server 20 forwards the personal information request PI-Request by means of a request PIR2 as shown in Figure 6. The request PIR2 comprises the detailed personal information request PI-Request, while the privacy policy PP has been replaced by the receipt number PI-RN. The request PIR2 communicated to the mobile phone 4 can be viewed by the user which provides (some or all) personal information in line with the personal information request PI-Request or (partially or completely) refuses to do so. This can be accomplished, for example, by filling in/answering, accepting or rejecting different fields or questions.

In case the user wants to know the privacy policy valid for the service provider 20, a respective request is communicated from the mobile phone 4 to the communications server 2. This request includes the receipt number PI-RN, on the basis of which the communications server 2 returns the privacy policy PP to the mobile phone 4. For this purpose, the receipt number PI-RN can be displayed by means of the mobile phone 4 and/or stored in the mobile phone 4, e.g. in the SIM 38, the WIM 40 or the memory 42 (see Figure 4).

Personal information provided by the user is sent to the communications server 2 which answers the personal information request from the service provider 20, for example by filling in respective fields the user has allowed to do. Further, the communications server 2 stores the user's personal information itself and/or which kind of personal information has been provided by the user in the privacy receipt data. Moreover, the communications server 2 includes used security methods (e.g. TLS 1.0 or WTLS) in the privacy receipt data and signs the privacy receipt with a time stamp and a signature been indicative of the communications server 2 to protect the user and itself for example of modifications of the privacy policy by the service provider 20 after having obtained the personal information.

In Figure 7, the resulting privacy receipt data is shown including the receipt number PI-RN, the privacy policy PP, the personal information PI-Data, data SM identifying the used security methods, the time stamp T and the signature S of the communications server 2.

Then, the communications server 2 forwards the data generated on the basis of the personal information PI-Data provided by the user to the service provider 20. Upon receipt of the requested personal information or at least a minimum thereof, the service provider 20 delivers the requested service. In case, the communications server 2 has "blinded" the mobile phone 4 with respect to the service provider 20, the communications server 2 has to map between the service provider 20 and the mobile phone 4 for delivering the requested service. Otherwise, the service can be delivered directly to the mobile phone 4.

Assuming, the user of the mobile phone 4 wants to access the privacy receipt data stored by the communications server 2, e.g. in case of alleged violation of the privacy policy the user has agreed upon, a privacy receipt request is sent from the mobile phone 4 to the communications server 2 which returns the requested privacy receipt data on the basis of the receipt number PI-RN included in the privacy receipt request.

It has to be noted, that a privacy receipt request can be issued from the mobile phone 4 anytime during or after the above described procedure independently of the data actually included in the privacy receipt data as long as the receipt number PI-RN is available for the mobile phone 4.

Optionally, the personal information PI-Data provided by the user by means of the mobile phone 4 can be stored in the mobile phone 4 instead of inserting the personal information PI-data in the privacy receipt data. In this case, the personal information PI-Data can be merged with a privacy receipt requested from the communications server 2 upon receipt by the mobile phone 4.

### Scenario B

Assuming, the user of the mobile phone 4 wants to contact the service provider 20 for data communication purposes in a way that the communications server 2 is not allowed to access and read data exchanges between the mobile phone 4 and the service provider 20 and in particular personal information provided by the user, the following procedure can be employed.

Comparable to scenario A, a service request is transmitted from the mobile phone 4 to the service provider 20. Then, security methods to be employed for data communications between the mobile phone 4 and the service provider 20 are negotiated and agreed upon, for example encryption, authentication, certification methods and the like.

Then, the service provider 20 sends a request PIR3 illustrated in Figure 8 to the communications server 2. The request PIR3 is protected by the security methods agreed upon, for example the request PIR3 is at least partially encrypted. The employed security methods must ensure that the communications server 2 can recognize/read the flag PI-Flag in order to be informed that personal information is requested by the service provider and that a privacy receipt has to be created.

Further, the security methods should allow that the communications server 2 can remove the privacy policy PP as described above. For example, the request PIR3 can be encrypted such that only the detailed personal information request PI-Request is encrypted while the flag PI-Flag and the privacy policy PP are not encrypted. As an alternative, the privacy policy PP can be encrypted and marked by a further flag such that the communications server 2 can remove the privacy policy PP by means of this flag. Since in this scenario the security method employed by the mobile phone 4 and the service provider 20 can be considered as an individual privacy policy for the mobile phone 4 and the service provider 20, the security methods can be included in the privacy policy PP.

Upon receipt of the request PIR3, the communications server 2 "notices" the flag PI-Flag and assigns a receipt number PI-RN to this request. Further, the communications server 2 detaches the privacy policy PP and stores the same together with the receipt number PI-RN in the privacy receipt data, which will be discussed below with reference to Figure 10.

Such an encryption of the request PIR3 is illustrated in Figure 8 wherein the parts in italics indicate encrypted data.

Following, the communications server 2 transmits a request PIR4 to the mobile phone 4 including the receipt number PI-RN and the encrypted personal information request PI-Request, as shown in Figure 9. Comparable to the request PIR2 (see Figure 6), the request PIR4 does not include the privacy policy PP. The portions in italics of Figure 9 illustrate data being encrypted.

The mobile phone 4 decrypts the request PIR4 and (partially or completely) answers or rejects the personal information request, encrypts the provided personal information PI-Data and returns the same to the communications server 2.

The communications server 2 stores the encrypted personal information PI-Data from the mobile phone 4 in the privacy receipt data and includes, as described above, further data which results in the privacy receipt data illustrated in Figure 10. Again, the portions in italics of Figure 10 indicate encrypted data.

The encrypted personal information PI-Data are forwarded to the service provider 20 which in response thereto delivers the requested service to the mobile phone 4.

Optionally, the personal information PI-data is sent in two copies encrypted with different keys to the communications server 2. The first copy is encrypted with the key of the user for storing in the privacy receipt data and decryption by the user. The second copy is encrypted by the public key of the service provider and forwarded to the service provider for decryption. Alternatively, a single encrypted copy of the personal information PI-data is sent.

The letter option requires however that both the user and the service provider can decrypt the information. This may lead to problems since it is difficult to administrate such a decryption by the user and the service provider if a key pair is attributed for each combination of a user with a service provider.

As described with respect to the scenario A, the mobile phone 4 can access the privacy receipt data be means of a respective privacy receipt request. Here, it has to be noted that the security methods agreed upon should be available to the mobile phone 4 for decrypting encrypted data portions.

### Scenario A + B

A combination or mixture of the scenarios A and B is also possible, e.g. for personal information requests for filling functions, for any information like geographic location of the mobile phone 4 or personal preferences of the user and for performing data communications between the mobile phone 4 and the service provider 20 including encrypted and non-encrypted data.

### Scenario C

In the following, a procedure is described wherein at least a part of data communications between the mobile phone 4 and the service provider 20 are performed directly between the same by "tunneling" the communications server 2, i.e. the communications server 2 can not access data traffic between the mobile phone 4 and the service provider 20.

Up to the point, were security methods are agreed upon for data communications between the mobile phone 4 and the service provider 20, the procedure of scenario C corresponds with the respective steps described with respect to scenario B. Here, the security method to be employed includes an agreement that the communications server 2 is to be tunneled.

Then, the service provider 20 transmits a personal information request to the mobile phone 4, wherein the above described flag PI-Flag is not required. Optionally, the service provider 20 includes its privacy policy in this request.

In response to the request, the mobile phone 4 returns personal information to the service provider 20 and further sends the personal information as, optionally encrypted, data to the communications server 2 for storage.

For the generation of a privacy receipt, the communications server 2 assigns a receipt number to the encrypted personal information obtained from the mobile phone 4 and returns the receipt number to the mobile phone 4. As described above, the privacy receipt can include a time stamp, a signature associated to the communications server 2 and the like.

For obtaining the privacy receipt from the communications server 2 by the mobile phone 4, it is referred to the description given above.

For including the privacy policy in the privacy receipt, the privacy policy received from the service provider in the personal information request is forwarded by the mobile phone 4 to the communications server 2. For an enhanced level of security, is possible that the communications server 2 further requests the privacy policy from service provider 20 and compares the privacy policies received from the mobile phone 4 and from the service provider 20. In case the comparison shows that the received privacy policies are equal, the privacy policy is stored in the privacy receipt. Otherwise, the communications server 2 warns the user of the mobile phone 4 by communicating a respective warning message.

### Scenario D

As an alternative to or as an additional option for the above described embodiments, the providing of personal information to the service provider 20 can be performed by the communications server 2 in accordance with indications obtained from the mobile phone 4 and defined by its user, respectively. Such indications or indicator data comprise information for the communications server 2 which kind of personal data the user allows to be transmitted to the service provider 20 in response to a request for personal information. For example, the indications inform the communications server 2 that, upon a request from the service provider 20, the name, the address, the bank account, the credit card number and the like of the user may be provided to the service provider 20. This manner of providing personal information to the service provider 20 has the advantage that the user and the mobile phone 4, respectively, are not involved in the actual providing of personal information resulting in an enhanced comfort for the user and a reduced amount of data to be communicated between the mobile phone 4 and the communications server 2. In case the service provider request for personal information is in the form of a list or a questionnaire, the communications server 2 fills in the respective fields or answers the respective questions in accordance with the indications from the mobile phone 4.

Moreover, this manner of providing personal information to a service provider allows the communication of personal information which actually cannot be provided by an end user device or its user or can only provided with additional efforts. Examples for such personal information include the geographic location of an end user device and its user, respectively, actually available data transmission rates or bandwidth, reliability of communications links and the like. Further, such personal information can often be provided by communications server, e.g. in case of a communications server acting as mobile environment operator the end user device's location. Then, upon a respective indication, the communications server will provide such personal information in accordance with the indication.

For example, a user regularly ordering from a food delivery service which requests for each order the name, the address and the credit card number of the user is relieved from providing each time this information. Thus, employing the previously described providing of personal information by the communications server 2 simplifies such service requests for the user. On the other hand, this procedure does not impair the security for personal information since the user knows what kind of personal information has to be provided to the food delivery service, has agreed to provide the necessary information in view of a respective privacy policy and has allowed the communications server to provide these information, otherwise no food order would be accomplished.

### Further options

It is possible that the user of the mobile phone 4 can agree to forward a special set of personal information to the service provider 20 or further user related information, such as technical data of the mobile phone 4. Such data can be handled in manner comparable to the above personal information with respect to the transmission to the service provider 20, the privacy receipt data, storage by the communications server 2 and the mobile phone 4, encrypting, etc.

This can be accomplished by providing the communications server 2 respective data and allowing to transmit the data, advantageously stored by the communications server 2, automatically to the service provider 2 in response to a service provider request for personal information and/or the provision of personal information.

Further, data to be automatically forwarded can be provided by the mobile phone 4, e.g. stored in the SIM 38, the WIM 40 or the memory 42, and communicated to the communications server 2 and the service provider 20 in dependence of the actually scenario.

This makes it easier for the user to obtain a requested service by the service provider 20, in particular when (personal) information is often or regularly requested. Additionally, this procedure minimizes data communications between the mobile phone 4 and the communications server 2. For personal information protection purposes, such an automatic forwarding of (personal) information to the service provider 20 should be allowed only when the user of the mobile phone 4 actually agrees to provide personal information with respect to a currently requested service.

In order to minimize data stored by the communications server 2 and/or the mobile phone 4, it is possible to check whether the actually received privacy policy relating to a currently requested service is already stored. In that case, no further storing of the privacy policy is necessary.

In order to access the privacy receipt an icon can be provided on a display of the end user device. Such an icon can have a different appearances in dependence of personal data was transmitted to a service provider or not. Preferably, a list of service providers to which personal data was transmitted is displayed when the icon is accessed, and, in response to a selection of a desired personal information transmission from the list, a respective privacy receipt for a selected service provider is provided, e.g. downloaded to the end user device.

For example the icon can have the form of an eye comprising the following appearances and functionalities:
Closed eye: no personal information is provided.
Open eye: personal information has been provided during the actual session. In this context a session can be a "switched on" period for communications to and from the end user device or a pre-defined lifetime.
As explained above, the eye can be used for accessing the history of personal information transmission to third parties, i.e. accessing privacy receipts.

### Applications example

Just by the way of example for carrying out the present invention, the following application is described. A user wants a pizza to be delivered, wherein the pizza should be hot and paid in cash. The operator (i.e. the communications server in terms of the previous description) has stored a "pizza profile" of the user which includes personal information of the user to be provided in relation to pizza orders. The user chooses a pizza delivery service from the operator which in response thereto forwards the request to a pizza company for delivery. The pizza company requests for example the location, the credit card number and the pizza profile of the user and also communicates its privacy policy to the operator. The operator creates a privacy receipt and forwards the request to the user. Then, the user agrees to provide information related to the location and the pizza profile but denies to provide the credit card number. This response of the user is sent to the operator which fills in the location and the user's pizza profile, but not the credit card number, and forwards it to the pizza company. The operator stores which kind of personal information has been sent to the pizza company.

Referred to the above described icon, the eye has been switched on, i.e. the eye is open, when the agreement of the user for providing personal information has been sent to the operator. The user can click the eye for having a list of services to which personal information has been sent to be provided. For example, the user chooses the pizza delivery service and thereby requests the respective privacy receipt from the operator which returns the same to the user.

## Claims

1. A method for personal information access control for user data requested by a service provider (20), comprising the steps of:
- Providing service provider request data (PIR1, PIR3) from a service provider (20) to an end user device (4), the service provider request data (PIR1, PIR3) being indicative of personal information of a user of the end user device (4) to be accessed by the service provider (20),
- providing to the service provider (20) first user data (PI-Data) including at least one of personal information of the user as requested by the service provider (20) and rejections of personal information requested by the service provider (20),
- creating privacy receipt data including at least one of the first user data (PI-Data) or parts thereof and data being indicative of the service provider (20), and
- providing the privacy receipt data for access by the end user device (4).

2. The method of claim 1, wherein a privacy policy is valid for the service provider (20).

3. The method according to claim 1 or 2, wherein communications between the end user device (4) and the service provider (20) are performed via a communications server (2).

4. The method according to one of claims 1 to 3, wherein the first user data (PI-data) is provided by the end user device (4) to the service provider (20).

5. The method according to claim 3 or 4, wherein the first user data (PI-data) is provided by the communications server (2) to the service provider (20) in accordance with indications of the end user device (4) of personal information to be provided to the service provider (20).

6. The method according to one of claims 1 to 5, wherein the privacy receipt data is provided in response to privacy receipt request data from the end user device (4).

7. The method according to one of claims 1 to 6, comprising at least one of the steps of:
- communicating an end user device service request to the service provider (20), the end user device service request being indicative of a request from the end user device (4) for a service to delivered by the service provider (20), and
- delivering a service by the service provider (20) upon receipt of the personal information (PI-Data).

8. The method according to one of claims 3 to 7, comprising the steps of:
- communicating the service provider request data (PIR1, PIR3) from the service provider (20) to the communications server (2)
- creating the privacy receipt data by the communications server (2),
- generating, by the communications server (2), communications server request data (PIR2, PIR4) being indicative of the requested personal information, and
- communicating the communications server request data (PIR2, PIR4) from the communications server (2) to the end user device (4).

9. The method according to claim 8, comprising the steps of:
- communicating the first user data (PI-Data) from the end user device (4) to the communications server (2), and
- communicating, from the communications server (2) to the service provider (20), communications server data including at least portions of personal information in accordance with the first user data (PI-Data).

10. The method according to one of claims 3 to 9, comprising the steps of:
- communicating indicator data from the end user device (4) to the communications server (2), the indicator data being indicative of personal information to be provided to the service provider (20), and
- communicating, from the communications server (2) to the service provider (20), communications server data including personal information according to the indicator data.

11. The method according to one of claims 3 to 10, comprising at least one of the steps of:
- Communicating the service provider request data (PIR1, PIR3) from the service provider (20) directly to the end user device (4) by tunneling the communications server (2), and
- communicating the first user data (PI-Data) from the end user device (4) directly to the service provider (20) by tunneling the communications server (2).

12. The method according to claim 11, comprising the steps of:
- further communicating the first user data (PI-Data) from the end user device (4) to the communications server (2), and
- creating the privacy receipt data by the communications server (2) upon receipt of the first user data (PI-Data).

13. The method according to one of claims 2 to 12, comprising the step of:
- Including privacy policy data (PP) being indicative of the privacy policy in the service provider request data (PIR1, PIR3).

14. The method according to claim 13, comprising the steps of:
- removing the privacy policy data (PP) from the service provider request data (PIR1, PIR3), and
- including the privacy policy data (PP) or pointer data being indicative of the privacy policy data (PP) in the privacy receipt data.

15. The method according to one of claims 1 to 14, wherein the service provider request data (PIR1, PIR3) provided to the end user device (4) comprises receipt number data (PI-RN) being assigned to the providing of the service provider request data (PIR1, PIR3).

16. The method according to claim 15, wherein the receipt number data (PI-RN) is stored in the privacy receipt data.

17. The method according of claims 13 to 16, comprising the steps of:
- communicating the privacy policy data (PP) from the end user device (4) to the communications server (2), and
- including the privacy policy data (PP) in the privacy receipt data by the communications server (2).

18. The method according to one of claims 1 to 17, comprising the steps of:
- Comparing privacy policy data (PP) for the service provider request data (PIR1, PIR3) and further privacy policy data obtained from the service provider (20).

19. The method according to claim 18, comprising at least one of the steps of:
- providing warning data to the end user device (4) if the comparing fails, the warning data indicating that the privacy policy data for the service provider request data (PIR1, PIR3) and the further privacy policy data are not equal, and
- creating the privacy receipt data, if the comparing indicates that the privacy data policy (PP) for the service provider request data (PIR1, PIR3) and the further privacy policy data are equal.

20. The method according to claim 18 or 19, comprising the steps of:
- Communicating communications server privacy policy request data from the communications server (2) to the service provider (20), the communications server privacy policy request data being indicative of the further privacy policy data,
- communicating the further privacy policy data from the service provider (20) to the communications server (2), and
- performing the comparing of the privacy policy data by the communications server (2).

21. The method according to one of claims 1 to 20, comprising the steps of:
- Communicating privacy policy request data from the end user device (4), the privacy policy request data being indicative of a request of the end user device (4) to access the privacy policy data (PP), and
- communicating the privacy policy data (PP) to the end user device (4) for access by the end user device (4).

22. A communications server, comprising
- Communication means (44) for data communications with at least one of an end user device (4) and a service provider (20), and
- means (46, 48) for creating privacy receipt data being indicative of personal information provided by the end user device (4) upon request by a service provider (20).

23. The communications server according to claim 22, wherein at least one of the communication means (44) and the means (46, 48) for creating privacy receipt data are adapted and programmed to carry out the steps according to one of the claims 1 to 21.

24. An end user device (4), comprising:
- Communication means (32, 34) for data communications with at least one of a communications provider (2) and a service provider (20), and
- means (36, 38, 40, 42) being adapted and programmed to carry out the steps according to one of the claims 1 to 21.

25. A computer program product, comprising:
- program code portions for carrying out the steps according to one of the claims 1 to 21.

26. The computer program product according to claim 25, stored on a computer readable recording medium.
